# EUROPEAN PATENT SPECIFICATION

(11) **EP 4 027 106 B1**
(45) Date of publication and mention of the grant of the patent: **21.05.2025**
(21) Application number: 20860144.3
(22) Date of filing: 17.07.2020
(51) Int. Cl.: H04N 13/239, H04N 13/133, H04N 23/45, G01C 3/08, G01C 3/14, H04N 13/00, H04N 13/25

(54) **IMAGE PROCESSING DEVICE**
BILDVERARBEITUNGSVORRICHTUNG
DISPOSITIF DE TRAITEMENT DES IMAGES

(30) Priority: 04.09.2019 JP 2019161080
(43) Date of publication of application: 13.07.2022
(73) Proprietor: Hitachi Astemo, Ltd., Ibaraki 312-8503 (JP)
(72) Inventor: YAMAZAKI, Kazuyoshi, Tokyo 100-8280 (JP)
(74) Representative: Mewburn Ellis LLP
(86) International application number: PCT/JP2020/027755
(87) International publication number: WO 2021/044746

(56) References cited:
- WO-A1-2018/123642
- JP-A- 2001 099 643
- JP-A- 2016 176 697
- JP-A- 2017 062 173
- JP-A- 2017 062 173
- US-A1- 2013 044 189
- US-A1- 2018 070 023
- US-A1- 2019 037 198

## Description

### Technical Field

The present invention relates to an image processing device.

### Background Art

There is a stereo camera technology as a three-dimensional object recognition technology. This technology is a technology in which parallax is detected based on trigonometry using a difference in how images of two cameras arranged at different positions are reflected, and a depth and a position of an object are detected using the parallax. When this technology is used, a position of an observation target can be accurately detected. The stereo camera technology is applied to detect and recognize a three-dimensional object in in-vehicle applications, robot applications, and the like. The images of the two cameras of the stereo camera are transformed by predetermined projection (for example, a central projection system), and the distance to an object is measured by detecting a difference between the images as the parallax.

Meanwhile, when a camera detection image changes due to a change with time or a change in temperature, a distance measurement error occurs as a result. For example, the camera detection image changes with a change in refraction of a lens due to the temperature or a change in the lens surface spacing. Further, when a lens barrel elongates/contracts according to the temperature so that a distance between the lens and an image sensor changes, the camera detection image is enlarged/reduced. When a distance error occurs due to these factors, accurate control (for example, vehicle control, robot control, and the like) based on a measurement result becomes difficult. Further, this hinders provision of accurate information to a driver in the case of an in-vehicle stereo camera.

In order to solve the problem of the occurrence of the distance measurement error due to the temperature change, PTL 1 below has an object of "performing highly accurate three-dimensional measurement even in a case where zoom and focus change in a three-dimensional measurement device using a stereo camera having a zoom and focus function" and describes a technique in which "the three-dimensional measurement device includes: a plurality of imaging means including one or more imaging means capable of changing zoom and focus; a control means for zooming and focusing; a stereo image processing unit that performs stereo image processing on captured images output from the plurality of imaging means and measuring three-dimensional information; and a camera information storage means for storing camera information required to perform the stereo image processing. The camera information storage means has a plurality of pieces of camera information corresponding to states of camera information that changes depending on a zoom state and a focus state of each imaging means, and the stereo image processing unit acquires the zoom state and the focus state of each imaging means and acquires the corresponding camera information from the camera information storage means for use in the stereo image processing".

The following PTL 2 has an object of "performing distortion correction processing in response to a temperature change while reducing necessary storage capacity as compared with a conventional method for correcting distortion of an image using LUT", and describes a technique in which "a coefficient of a distortion correction formula including a polynomial expression capable of transforming an image position before distortion correction processing in a captured image to an ideal position over a predetermined temperature range by changing the coefficient is stored in a correction coefficient storage unit as a correction coefficient for each of a plurality of specific temperatures different from each other. A distortion correction processing unit reads a correction coefficient, which minimizes an index value (deviation amount) indicating the degree of distortion of the captured image at a detected temperature, from the correction coefficient storage unit based on the temperature detected by a temperature sensor, and performs the distortion correction processing by the distortion correction formula using the read correction coefficient".

PTL 3 proposes a stereo camera device having an image acquisition part for acquiring two images from two imaging parts, a temperature information acquisition section for acquiring temperature information of the two imaging parts, an image correction part for correcting the image based on the acquired temperature information, and a parallax image calculation part for generating a parallax image based on the image corrected by the image correction part.

PTL 4 proposes a data capture device including: an imaging module including an image sensor and a lens; a temperature sensor associated with the imaging module; a memory storing, for a plurality of temperatures, respective imaging module response parameters corresponding to the temperatures; an imaging controller connected to the image sensor and the temperature sensor; the imaging controller including a frame generator configured to: receive image data from the image sensor and a temperature measurement from the temperature sensor; generate a raw image frame containing the temperature measurement and the image data; and provide the raw image frame to a calibrator for generation of a calibrated image frame based on the raw image frame and one of the imaging module response parameters corresponding to the temperature matching the temperature measurement.

PTL 5 proposes an imaging apparatus including a plurality of imaging units, and a radiator operable to uniformize temperatures of the plurality of the imaging units.

PTL 6 proposes an electronic device including: a housing; a first image sensor configured to provide a first angle of view; a second image sensor configured to provide a second angle of view; and a processor, wherein the processor is configured to obtain a first image having first resolution for a plurality of objects outside the electronic device, the plurality of objects corresponding to the first angle of view, to obtain a second image having second resolution for some objects corresponding to the second angle of view among the plurality of objects, to crop a third image having the second resolution, corresponding to at least part of the some objects, from the second image based on at least a depth-map using the first image and the second image, and to compose the third image with a region corresponding to the at least part of the some objects in the first image.

### Citation List

### Patent Literature

PTL 1: JP 2008-241491 A
PTL 2: JP 2012-147281 A
PTL 3: JP 2017-062173 A
PTL 4: US 2019-037198 A1
PTL 5: US 2013-044189 A1
PTL 6: US 2018-070023 A1

### Summary of Invention

### Technical Problem

In the related art, a frequency of changing correction with respect to a temperature change is high from the viewpoint of correcting a temperature of each lens, and thus, there is a problem that the processing becomes complicated. The problem of the frequency of changing the correction processing is not described in the above patent literatures, and thus, a countermeasure for the problem is not disclosed. For example, the three-dimensional measurement device described in Patent Literatures 1 and 2 performs image processing according to temperatures of two cameras with respect to a change in a camera detection image caused by the temperature. Therefore, it is necessary to change the image processing each time the temperature of each camera changes. Since the change of the image processing causes a delay in time until the control, it is desired to minimize the change.

The present invention has been made in view of the above problems, and an object thereof to provide an image processing device capable of reducing a change frequency of a processing unit with respect to a temperature change of a lens of the image processing device.

### Solution to Problem

The present invention provides an image processing device according to claim 1.

### Advantageous Effects of Invention

According to the image processing device of the present invention, it is possible to reduce the change frequency of the processing unit with respect to the temperature change of the lens of the image processing device.

### Brief Description of Drawings

[FIG. 1] FIG. 1 is a block diagram illustrating a configuration example of an image processing device 10 according to a first comparative example.
[FIG. 2] FIG. 2 is a block diagram illustrating a configuration example of a computing device 11.
[FIG. 3] FIG. 3 is a view for describing the influence of a temperature difference in the first comparative example.
[FIG. 4] FIG. 4 is a graph illustrating an example of a distance measurement error when a temperature difference between cameras changes.
[FIG. 5] FIG. 5 is an image view for describing an effect of the present invention in comparison with the related art.
[FIG. 6] FIG. 6 is a configuration example of the computing device 11 in a case where processing is changed based on whether the temperature difference falls within a predetermined temperature range.
[FIG. 7] FIG. 7 is a block diagram illustrating a configuration example of the computing device 11 included in the image processing device 10 according to a second comparative example.
[FIG. 8] FIG. 8 is an image view for describing an effect of the second comparative example in comparison with the first comparative example.
[FIG. 9] FIG. 9 is a block diagram illustrating a configuration example of the computing device 11 included in the image processing device 10 according to a third comparative example.
[FIG. 10] FIG. 10 illustrates processing with respect to a temperature change in the third comparative example.
[FIG. 11] FIG. 11 is a block diagram illustrating a configuration example of the image processing device 10 according to a fourth comparative example.
[FIG. 12] FIG. 12 illustrates a synthesized image of two camera images in the case of being used for an in-vehicle application as an example.
[FIG. 13] FIG. 13 is a block diagram illustrating a configuration example of the computing device 11 in the fourth comparative example.
[FIG. 14] FIG. 14 is a block diagram illustrating an example of a configuration including the image processing device 10 according to an embodiment.
[FIG. 15] FIG. 15 is a block diagram illustrating a configuration example of the computing device 11 in the embodiment.
[FIG. 16] FIG. 16 is a view illustrating a detection distance when a temperature difference between cameras becomes positive and a detection distance when the temperature difference becomes negative.

### Description of Embodiments

### <First Comparative Example>

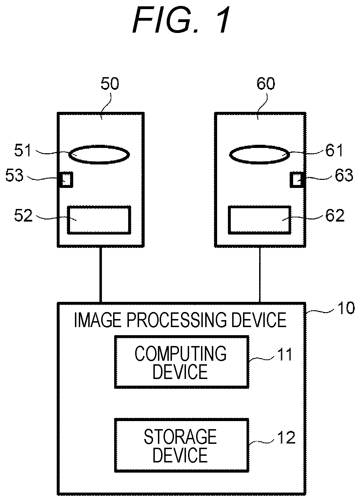

FIG. 1 is a block diagram illustrating a configuration example of an image processing device 10 according to a first comparative example of the present invention. The image processing device 10 is configured to enable input of a plurality of images, and is connected so as to be capable of receiving images from a camera 50 (first camera) and a camera 60 (second camera) constituting a stereo camera, respectively, in the example of FIG. 1.

The camera 50 includes a lens 51 (first lens) and an image sensor 52 (first image sensor). The camera 60 includes a lens 61 (second lens) and an image sensor 62 (second image sensor). The camera 50 detects an image of an object or the like by the image sensor 52 via the lens 51. The camera 60 detects an image of an object or the like with the image sensor 62 via the lens 61.

The camera 50 includes a temperature sensor 53 (first temperature sensor). The temperature sensor 53 detects a temperature (first temperature) related to the camera 50. The camera 60 includes a temperature sensor 63 (second temperature sensor). The temperature sensor 63 detects a temperature (second temperature) of the camera 60. The meaning of the "temperature related to the camera" can be appropriately defined by those skilled in the art, and may be, for example, a temperature of a lens, may be a temperature in the vicinity of the lens, may be a temperature of an image sensor (particularly a temperature of a CMOS element), may be temperatures of other components of the camera or a temperature of a space in the camera. The temperature sensors 53 and 63 may be temperature sensors outside the camera.

The image processing device 10 has a configuration as a known computer, and includes a computing device 11 and a storage device 12. The computing device 11 includes, for example, a microprocessor and the like, and the storage device 12 includes, for example, at least one of a volatile memory and a nonvolatile memory. The storage device 12 can store an image and another information, and functions as, for example, an image storage means.

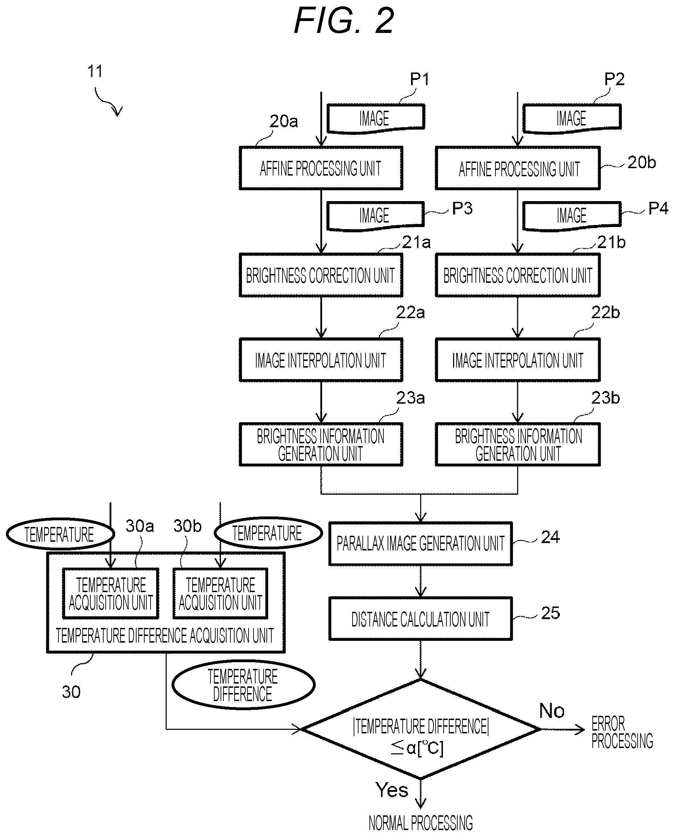

FIG. 2 is a block diagram illustrating a configuration example of the computing device 11. The computing device 11 includes affine processing units 20a and 20b, brightness correction units 21a and 21b, pixel interpolation units 22a and 22b, brightness information generation units 23a and 23b, a parallax image generation unit 24, a distance calculation unit 25, and a temperature difference acquisition unit 30. The computing device 11 acquires an image P1 (first image) from the camera 50 and acquires an image P2 (second image) from the camera 60.

The affine processing unit 20a performs affine processing on the image P1. The affine processing is, for example, a linear coordinate transformation process, but may include a non-linear operation. As a result of performing the affine processing, the affine processing unit 20a outputs an image P3 (third image). Similarly, the affine processing unit 20b performs affine processing on the image P2 to acquire an image P4 (fourth image). The affine processing unit 20a and the affine processing unit 20b may also execute distortion transformation processing other than the affine processing. For example, in a case where a lens projection system is fsinθ, projective transformation to ftanθ may be performed. However, a format of an image after the projective transformation may be a system other than ftanθ.

The brightness correction unit 21a corrects the brightness of each pixel of the image P3. For example, correction is performed based on a difference between a gain of the camera 50 and a gain of each pixel in the image P3, and the like. Similarly, the brightness correction unit 21b corrects the brightness of each pixel of the image P4.

The pixel interpolation unit 22a performs demosaicing processing on the image P3. For example, a RAW image is transformed into a color image. Similarly, the pixel interpolation unit 22b performs the demosaicing processing on the image P4.

The brightness information generation unit 23a generates brightness information of the image P3. The brightness information is information indicating a brightness value of each pixel. For example, the brightness information is generated by transforming a color value of each pixel of a color image into a brightness value for generating a parallax image. Similarly, the brightness information generation unit 23b generates brightness information of the image P4.

A parallax image generation unit 24 calculates parallax between two images based on the image P3 and the image P4 (or information generated based on these). A distance calculation unit 25 calculates a distance to an object appearing in an image based on the calculated parallax.

Considering the processing in the brightness correction unit 21a and the brightness correction unit 21b, the pixel interpolation unit 22a and the pixel interpolation unit 22b, the brightness information generation unit 23a and the brightness information generation unit 23b, and the parallax image generation unit 24, it can be said that the distance calculation unit 25 detects the distance to the object in the image based on the image P3 and the image P4. Those skilled in the art can arbitrarily design a distance measurement criterion, and the distance to the object can be measured from a predetermined distance reference point defined according to a positional relationship between the camera 50 and the camera 60, for example.

The temperature difference acquisition unit 30 includes a temperature acquisition unit 30a (first temperature acquisition unit) and a temperature acquisition unit 30b (second temperature acquisition unit). The temperature acquisition unit 30a acquires a temperature related to the camera 50 from the temperature sensor 53, and the temperature acquisition unit 30b acquires a temperature related to the camera 60 from the temperature sensor 63. The temperature difference acquisition unit 30 acquires and outputs a temperature difference (temperature difference between cameras) between the temperature related to the camera 50 and the temperature related to the camera 60.

When an absolute value of the temperature difference is equal to or smaller than a predetermined value (α°C in FIG. 2), the computing device 11 outputs distance information output from the distance calculation unit 25 to a control processing unit (not illustrated) (referred to as normal processing). The control processing unit controls a vehicle, a robot, and the like based on the distance information output from the distance calculation unit 25. For example, in the case of a vehicle, collision damage reduction braking, lane departure prevention assistance, and the like are performed.

When the absolute value of the temperature difference is equal to or larger than the predetermined value, it is considered that the reliability of the distance information is low, and thus, the computing device 11 outputs error information indicating that an error has occurred at the time of calculating the parallax image or the distance is output to the control processing unit (error processing). For example, in the case of a vehicle, when the error information is output, the control processing is temporarily stopped, and the information is notified to a driver through an instrument panel or the like. Thereafter, when the absolute value of the temperature difference becomes smaller than the predetermined value, the processing is changed to the normal processing. Such notification improves the safety consciousness of the driver and urges safe driving. For example, when the image processing device 10 outputs the error information in a case where another distance sensor is used together in an in-vehicle application, a robot application, or the like, the control based on the distance information of the image processing device 10 may be stopped, and the control may be performed using distance information of another distance sensor. In the first comparative example, the processing is changed according to the temperature difference between the cameras, and thus, it is possible to avoid inappropriate control accompanying a distance measurement error.

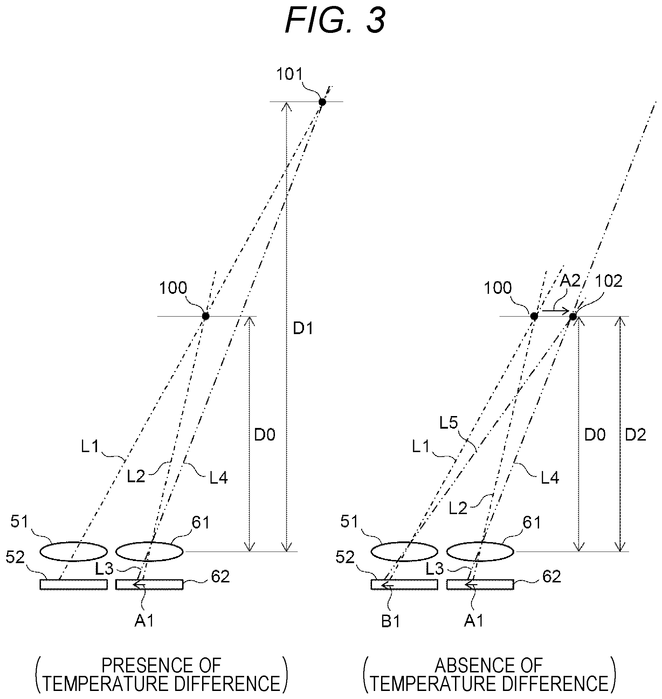

FIG. 3 is a view for describing the influence of the temperature difference in the first comparative example. A reason for detecting the temperature difference between the cameras will be described with reference to FIG. 3. A left view in FIG. 3 illustrates a state where a temperature difference between the lens 51 and the lens 61 occurs, and a right view in FIG. 3 illustrates a state where the temperature difference between the lens 51 and the lens 61 disappears. Here, a distance to an object 100 is detected based on images acquired by the image sensor 52 and the image sensor 62 via the lens 51 and the lens 61.

In the left view of FIG. 3, a light beam L1 incident on the lens 51 from the object 100 and a light beam L2 incident on the lens 61 from the object 100 when measurement is performed in a state where there is no temperature difference (for example, a state where the camera 50 and the camera 60 are at a predetermined reference temperature) are indicated by one-dot chain lines. A distance D0 to the object 100 is detected based on a difference (parallax) between an incident position of the light beam L1 detected by the image sensor 52 and an incident position of the light beam L2 detected by the image sensor 62. In this case, there occurs no distance measurement error, and the distance D0 accurately represents the distance to the object 100.

In the left view of FIG. 3, it is assumed that a temperature difference occurs between cameras and the temperature of the lens 61 rises, for example. As a result, optical characteristics (a refractive index, a lens surface spacing, and the like) of the lens 61 change, and a state different from optical characteristics of the lens 51 is formed. As a result, the light beam L2 is incident on the image sensor 62 at a position shifted by an arrow A1. The computing device 11 determines that a light beam L4 is incident on the image sensor 62 from the viewpoint of parallax calculation, and erroneously detects that the light beam from the object 100 exists at an angle of view of the virtual light beam L4 indicated by a two-dot chain line. As a result, an intersection 101 between the light beam L1 and the virtual light beam L4 is erroneously detected as a position of the object 100, and the distance to the object 100 is detected as a distance D1. As can be seen from FIG. 3, the distance D0 and the distance D1 do not match, and a distance measurement error occurs. This is a mechanism of occurrence of the distance measurement error accompanying the temperature change of the lens.

Next, a case where there is no temperature difference between the cameras will be described with reference to the right view of FIG. 3. When the temperatures of the lens 51 and the lens 61 similarly rise, a light beam is incident on a position shifted by the arrow A1 on the image sensor 62 similarly to the left view of FIG. 3. The computing device 11 determines that the virtual light beam L4 is incident on the image sensor 62 from the viewpoint of parallax calculation, and erroneously detects that the light beam from the object 100 exists at the angle of view of the virtual light beam L4 indicated by the two-dot chain line. Further, a light beam is incident on a position shifted by an arrow B1 on the image sensor 52 similarly for the camera 50. The computing device 11 determines that a virtual light beam L5 is incident on the image sensor 52, and erroneously detects that the light beam from the object 100 exists at an angle of view of the virtual light beam L5 indicated by a two-dot chain line.

The computing device 11 detects an intersection 102 between the virtual light beam L5 and the virtual light beam L4 as a position of the object 100, and detects a distance D2. Since a difference between the distance D2 and the distance D0 is smaller than a difference between the distance D1 and the distance D0, the distance measurement error is improved. In particular, a temperature difference condition that the distance D2 and the distance D0 are set to be substantially the same also exists, and thus, a residual error is not a problem in practical distance measurement.

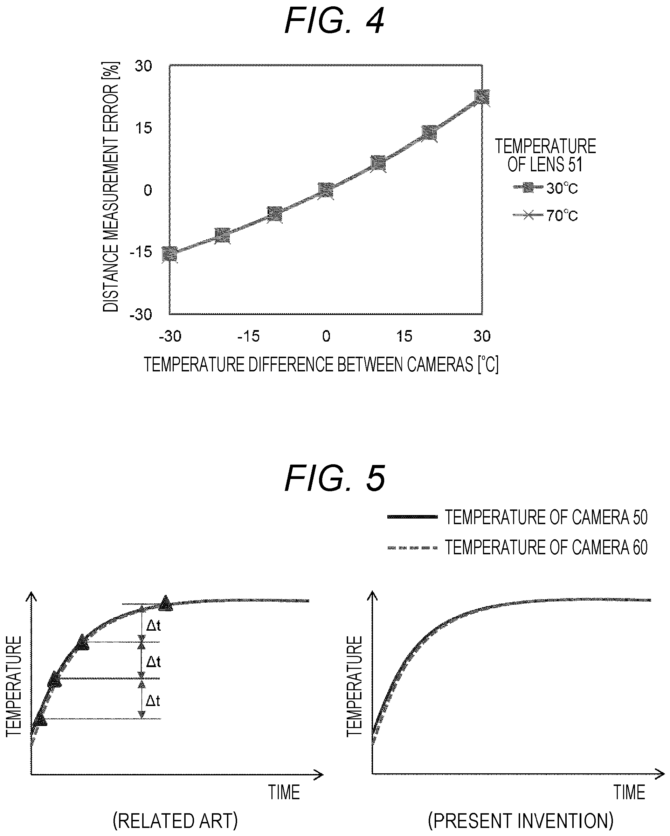

FIG. 4 is a graph illustrating an example of the distance measurement error when the temperature difference between the cameras changes. An effect of the first comparative example will be quantitatively described with reference to FIG. 4. The following condition examples were used at the time of calculating the graph of FIG. 4.

Distance to object: 50 m
Baseline length (distance between camera 50 and camera 60): 0.3 m
Lens projection system: orthogonal projection (fsinθ)
Lens focal length: 6 mm
Lens reference temperature: 30°C
Temperature of lens 51 (first temperature): 30°C, 70°C
Temperature difference between cameras: -30 to 30°C
Angle of view (angle of object that can be captured by both camera 50 and camera 60): 30 deg
Temperature sensitivity of lens 51 and lens 61: 0.0048 µm/°C/deg (linear change)

The above temperature sensitivity corresponds to displacement of a position of an image by 10 µm when an angle of view is 30 deg and a temperature change is 70°C. Here, it is assumed that the lens temperature sensitivity changes linearly with respect to an angle of view and a temperature. When considering manufacturing variations of a lens or the like, the temperature sensitivity actually varies depending on the lens, but the same effect can be obtained even if the temperature sensitivity varies (not that it is assumed that the temperature sensitivities of the lens 51 and the lens 61 are the same in this condition example). The lens temperature sensitivity is not necessarily linear, and a similar effect can be obtained even if the lens temperature sensitivity is non-linear.

From FIG. 4, it can be seen that the distance measurement error occurs depending on the temperature difference between the cameras regardless of the temperature of the lens 51. Further, it can be seen that the distance measurement error is small if the temperature difference is small. Although the temperature change of the lens has been described herein, the same applies to the influence of elongation/contraction of a lens barrel with the temperature. In this case, it is considered that a distance between a lens and an image sensor changes, and a position of a light beam incident on the image sensor is shifted, so that the same result as in FIG. 4 can be obtained.

For the above reasons, the image processing device 10 of the first comparative example determines that the reliability of the distance information is high and performs the normal processing when the absolute value of the temperature difference is equal to or smaller than the predetermined value. When the absolute value of the temperature difference is equal to or larger than the predetermined value, it is determined that the reliability of the distance information is low, and the error processing is performed. Since the temperature difference between the cameras is detected to change the processing according to the temperature difference in this manner, it is possible to avoid the inappropriate control accompanying the distance measurement error.

FIG. 5 is an image view for describing an effect of the present invention in comparison with the related art. A left view in FIG. 5 illustrates processing with respect to a temperature change in PTL 1 or PTL 2. A right view in FIG. 5 illustrates processing with respect to a temperature change in the first comparative example. In FIG. 5, the vertical axis represents the temperature, the horizontal axis represents time, and the time at which the image processing device 10 is activated is defined as time zero. When the image processing device 10 is activated, the temperature rises, and converges to a predetermined temperature after a lapse of a predetermined time as heat generation and heat dissipation become the same. A solid line and a dotted line indicate the temperature of the camera 50 and the temperature of the camera 60, respectively, and the temperatures of the two cameras change in the same manner. In the drawing, ▲ indicates a change timing of the processing.

In the case of the left view of FIG. 5, it is necessary to change the processing a plurality of times assuming that the processing is changed for each predetermined temperature Δt. On the other hand, in the case of the right view of FIG. 5, the error processing does not occur since no temperature difference occurs between the two cameras. Since the temperature change has a long time constant, the temperatures of the two cameras change slowly. Therefore, the temperature difference between the two cameras is less likely to occur as compared with the temperature change, a change frequency of the processing is low. In this manner, the image processing device 10 according to the present first comparative example has a feature that the change frequency of the processing can be reduced as compared with an image processing device in the related art (PTL 1 and PTL 2).

A temperature α of the first comparative example is not a fixed value and may be changed based on the temperature of the camera. Although the absolute value of the temperature difference is compared with α in the first comparative example, the processing may be changed based on whether the temperature difference falls within a predetermined temperature range. For example, there is a case where a distance error is asymmetric with respect to positive and negative temperature differences between cameras as illustrated in FIG. 4. Further, in a case where the temperature sensitivity is different between lenses or in a case where the temperature sensitivity of each lens is non-linear, there is a condition that the distance measurement accuracy is the best when a temperature difference is a predetermined value that is not zero.

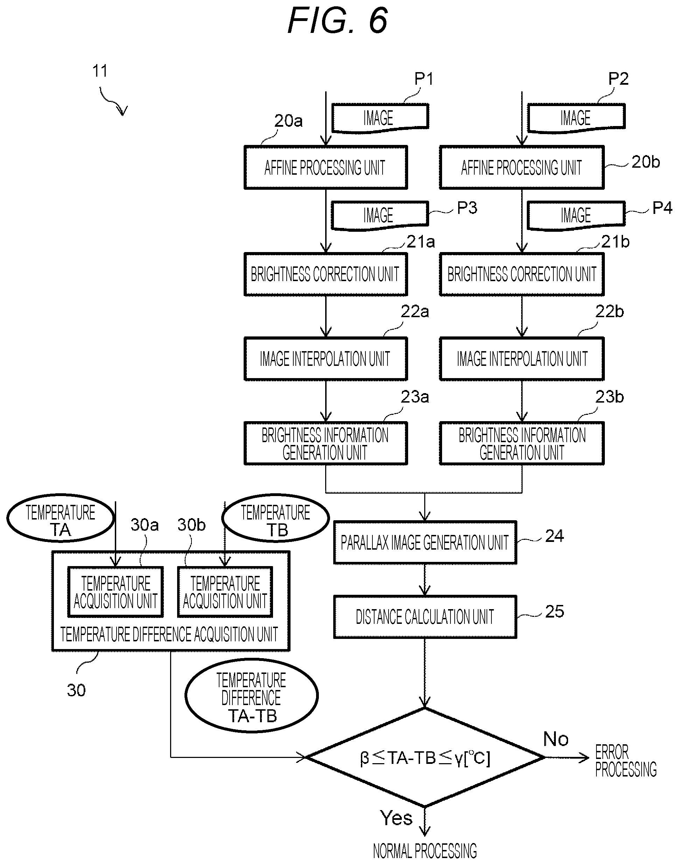

FIG. 6 is a configuration example of the computing device 11 in a case where processing is changed based on whether the temperature difference falls within the predetermined temperature range. In this case, assuming a temperature TA of the camera 50 and a temperature TB of the camera 60, the normal processing may be performed if TA - TB falls within a range of a lower limit temperature β and an upper limit temperature γ, and the error processing may be performed if TA - TB does not fall within the range. At this time, the computing device 11 may refer to, for example, a temperature (at least any of TA and TB) and change at least any of the lower limit temperature β and the upper limit temperature γ. The temperature α, the lower limit temperature β, and the upper limit temperature γ can be determined by a distance measurement tolerance in a system to which the present comparative example is applied. The computing device 11 stores data describing such a determination rule in the storage device 12, for example, and can determine the temperature α, the lower limit temperature β, and the upper limit temperature γ according to the data.

### <Second Comparative Example>

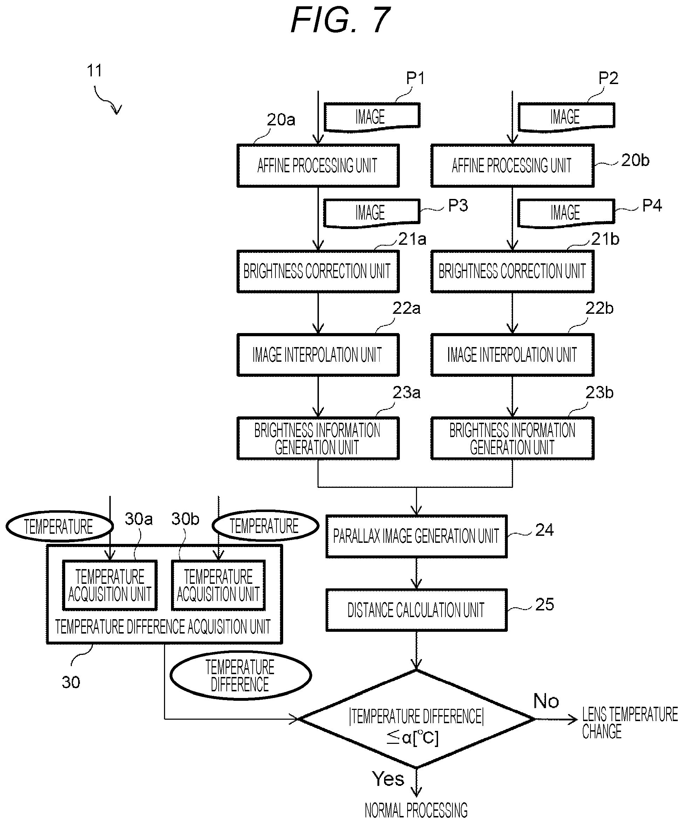

FIG. 7 is a block diagram illustrating a configuration example of the computing device 11 included in the image processing device 10 according to a second comparative example of the present invention. In the first comparative example, the error processing is performed when the absolute value of the temperature difference between the cameras is equal to or larger than the predetermined value. In the second comparative example, a temperature of a camera is changed so as to decrease a temperature difference when an absolute value of the temperature difference is equal to or larger than a predetermined value. The other configurations are the same as those in the first comparative example.

In the case of the first comparative example, the error processing is continued until the absolute value of the temperature difference between the cameras becomes equal to or smaller than the predetermined value. It is considered that it takes time until normal processing since a time constant of a temperature change is long if the temperature difference between the cameras increases. Therefore, the temperature difference is forcibly reduced by heating or cooling the camera in the second comparative example. A camera at a higher temperature may be cooled or a camera at a lower temperature may be heated. The computing device 11 instructs a cooling device or a heating device to adjust the temperature of the camera.

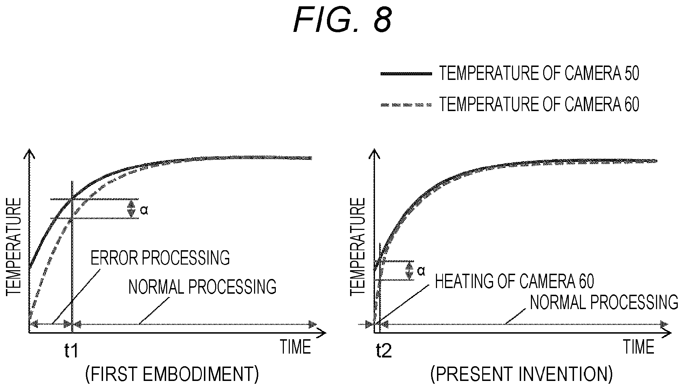

FIG. 8 is an image view for describing an effect of the present comparative example in comparison with the first comparative example. A left view in FIG. 8 illustrates processing with respect to a temperature change in the first comparative example, and a right view in FIG. 8 illustrates processing with respect to a temperature change in the second comparative example. A difference from FIG. 5 is that temperatures of the camera 50 and the camera 60 at the time of activation are different. The temperatures at the time of activation may be different when the two cameras are mounted on both ends of a vehicle, for example, in the case of an in-vehicle application.

In the case of the image processing device 10 of the first comparative example, the temperature difference between the cameras at the time of activation is larger than the temperature α, and thus, the error processing is performed. When the temperature difference between the cameras becomes smaller than the temperature α after a lapse of time t1, the processing transitions to the normal processing. On the other hand, the temperature difference between the cameras is larger than the temperature α at the time of activation in the case of the image processing device 10 of the second comparative example, and thus, the camera 60 is heated. As a result, the processing can transition to the normal processing within time t2 shorter than the time in the left view of FIG. 8.

A method for changing the camera temperature in the second comparative example is not limited. For example, in a case where a lens is heated, a heating wire may be used. Further, a fan may be used in a case where cooling is performed. Further, a temperature changing mechanism mounted for other applications may be used. For example, in the case of an in-vehicle application, air conditioning or the like is used. Furthermore, the amount of heat generated by another element may be used. For example, in the case of an in-vehicle application, a head lamp may be used. The camera 50 and the camera 60 can be mounted in or near two headlamps, and the camera can be forcibly warmed using heat generated from the headlamp. In this case, the head lamp on a side having a lower temperature may be turned on.

### <Second Comparative Example: Summary>

The image processing device 10 according to the second comparative example can generate highly reliable distance information by forcibly changing the temperature of the camera when the temperature difference between the cameras does not fall within a reference range. Furthermore, it is possible to suppress the number of times of changing image processing according to a temperature as in PTLs 1 and 2, and to eliminate a delay in time accompanying the change in the image processing.

Although the absolute value of the temperature difference is compared with the temperature α in the second comparative example, normal processing may be performed if TA - TB falls within the range between the lower limit temperature β and the upper limit temperature γ, and the temperature of the camera may be changed if TA - TB does not fall within the range in the same manner as in FIG. 6 Further, the temperature of the camera is changed in the description of the second comparative example, but a temperature of a lens may be changed.

### <Third Comparative Example>

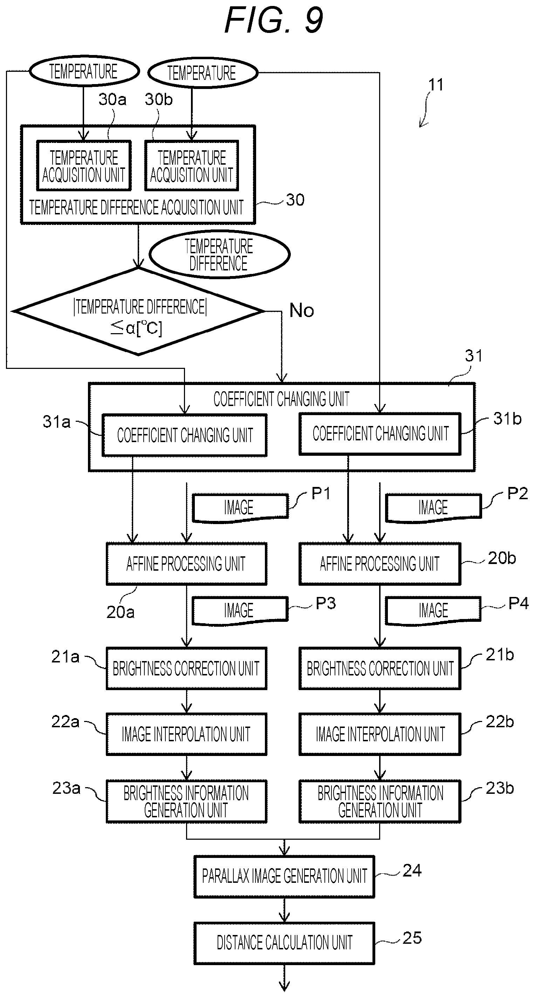

FIG. 9 is a block diagram illustrating a configuration example of the computing device 11 included in the image processing device 10 according to a third comparative example of the present invention. In the first comparative example, the error processing is performed when the absolute value of the temperature difference between the cameras is equal to or larger than the predetermined value. In the third comparative example, an image processing method is changed when an absolute value of a temperature difference is equal to or larger than a predetermined value. In the case of the first comparative example, the affine processing is performed using a coefficient as a fixed value. On the other hand, a coefficient of affine processing is changed when the temperature difference becomes equal to or larger than the predetermined value in the third comparative example. Hereinafter, the processing of the third comparative example will be described.

The computing device 11 includes a coefficient changing unit 31 in addition to the configuration described with reference to FIG. 2. The coefficient changing unit 31 further includes a coefficient changing unit 31a and a coefficient changing unit 31b. When the absolute value of the temperature difference between cameras is equal to or smaller than the predetermined value (α°C in FIG. 9), transformation processing is performed by a predetermined affine coefficient. When the absolute value of the temperature difference is equal to or larger than the predetermined value, the affine transformation is performed after changing the affine coefficient as follows.

The coefficient changing unit 31 changes coefficients of transformation processing performed by the affine processing unit 20a and the affine processing unit 20b (a first correction unit and a second correction unit), respectively. For example, the coefficient changing unit 31a and the coefficient changing unit 31b generate a transformation table representing transformation with respect to the images P1 and P2 based on temperature of the cameras and a predetermined transformation reference table. The transformation reference table may be stored in advance in the storage device 12, for example. In this case, it can be said that the storage device 12 functions as a transformation reference coefficient storage unit. This transformation table may be a coefficient of affine processing in PTLs 1 and 2.

The images P3 and P4 respectively output from the affine processing unit 20a and the affine processing unit 20b are input to the parallax image generation unit 24 via the brightness correction unit 21a, the brightness correction unit 21b, the brightness information generation unit 23a, and the brightness information generation unit 23b. The parallax image generation unit 24 calculates parallax between two pieces of image information based on the image P3 and the image P4 (or information generated based on these). The distance calculation unit 25 calculates a distance to an object appearing in an image based on the parallax.

In the third comparative example, the coefficient of the affine processing is changed only when the absolute value of the temperature difference is equal to or larger than the predetermined value. The image processing device 10 of the third comparative example has a feature that a processing change frequency can be reduced as compared with the image processing device in the related art (PTLs 1 and 2) as described in the first comparative example.

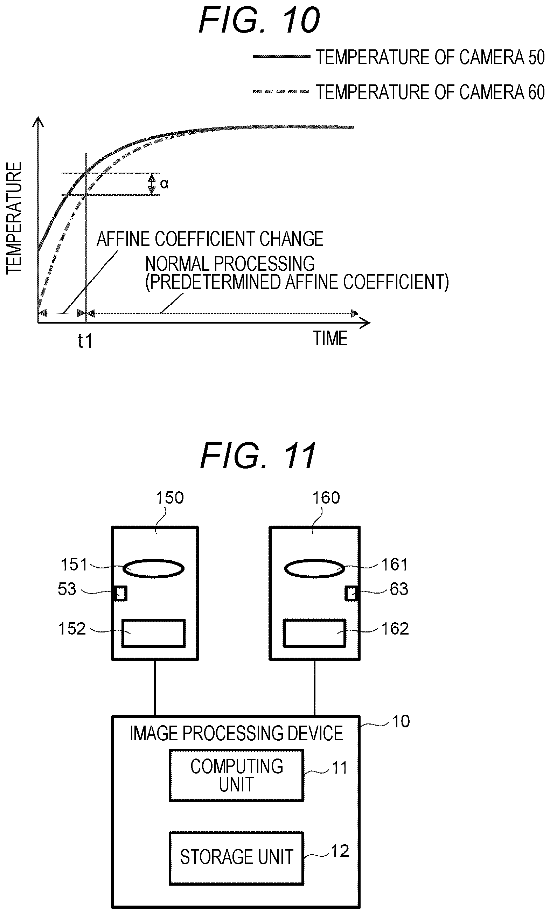

FIG. 10 illustrates processing with respect to a temperature change in the third comparative example. Here, it is assumed that there is a temperature difference at the time of activation. In this case, a difference from FIG. 5 is that temperatures of the camera 50 and the camera 60 at the time of activation are different. In the image processing device 10 of the third comparative example, the affine processing coefficients of the affine processing unit 20a and the affine processing unit 20b are changed when the temperature difference between the cameras at the time of activation is larger than a temperature α. When the temperature difference between the cameras becomes smaller than the temperature α (time t1), the processing transitions to processing using an affine coefficient which is a predetermined value. The similar processing can be also performed in the first and second comparative examples.

Although the affine processing coefficients of the affine processing unit 20a and the affine processing unit 20b are changed in the third comparative example, for example, the affine processing coefficient of only one of the affine processing unit 20a and the affine processing unit 20b may be changed according to the temperature difference. This is based on the same reason as the description that the distance measurement error is reduced in the case of the virtual light beam L5 in the right view of FIG. 3 while the light beam from the object 100 is erroneously detected to exist at the angle of view of the virtual light beam L4 indicated by the two-dot chain line in the left view of FIG. 3. That is, highly accurate distance measurement can be implemented by changing an affine processing method only for the image P1 of an image sensor 52 and transforming the image to obtain the virtual light beam L5. As a predetermined offset is added by the parallax image generation unit 24 based on a concept similar to this, an effect similar to that of changing the affine processing coefficient can be obtained.

Although the absolute value of the temperature difference is compared with the temperature α in the third comparative example, normal processing may be performed if TA-TB falls within the range of the lower limit temperature β and the upper limit temperature γ, and affine processing coefficients of the affine processing unit 20a and the affine processing unit 20b may be changed if TA-TB does not fall within the range in the same manner as in FIG. 6

### <Fourth Comparative Example>

FIG. 11 is a block diagram illustrating a configuration example of the image processing device 10 according to a fourth comparative example of the present invention. In the fourth comparative example, the image processing device 10 acquires images from cameras 150 and 160, respectively. Although the cameras 150 and 160 are not stereo cameras, a fact that the image processing device 10 acquires images from the two cameras is similar to the first comparative example.

The camera 150 includes a lens 151 (first lens) and an image sensor 152 (first image sensor). The camera 160 includes a lens 161 (second lens) and an image sensor 162 (second image sensor). The camera 150 detects an image of an object or the like with the image sensor 152 via the lens 151. The camera 160 detects an image of the object or the like with the image sensor 162 via the lens 161. The camera 150 is a camera having a wider field of view than the camera 160. The camera 160 is a camera capable of detecting a farther side than the camera 150.

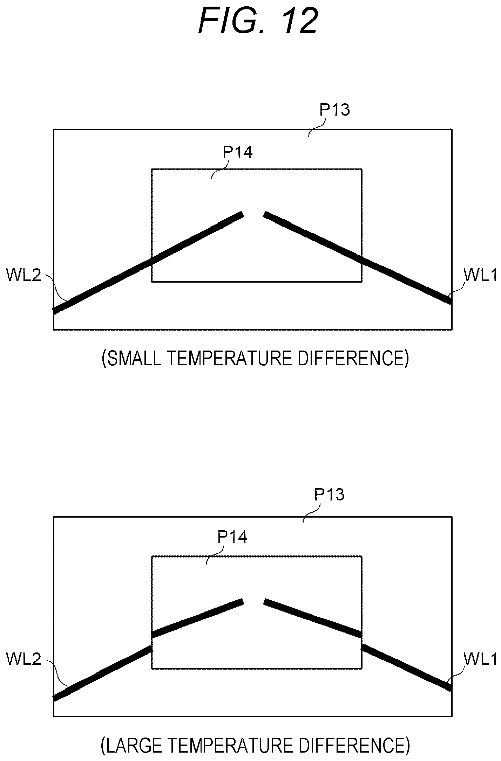

FIG. 12 illustrates a synthesized image of two camera images in the case of being used for an in-vehicle application as an example. An upper view of FIG. 12 illustrates a case where a temperature difference is small, and a lower view of FIG. 12 illustrates a case where the temperature difference is large. An image P13 is an output image of the camera 150. An image P14 is an output result of the camera 160. Since such a synthesized image is generated, the resolution in a progressing direction of a vehicle can be improved, and a wide field of view can be realized. In this example, a white line WL1 and a white line WL2 are reflected on the image P13 and the image P14, respectively.

When there is no temperature difference, the white line WL1 and the white line WL2 are smoothly connected as illustrated in the upper view of FIG. 12. When the temperature difference occurs, a detection position of an image on one side is changed (shifted by the arrow A1) as illustrated in the left view of FIG. 3, and thus, the white line WL1 and the white line WL2 are not smoothly connected as illustrated in the lower view of FIG. 12. The synthesized image as illustrated in the lower view of FIG. 12 is different from the actual image.

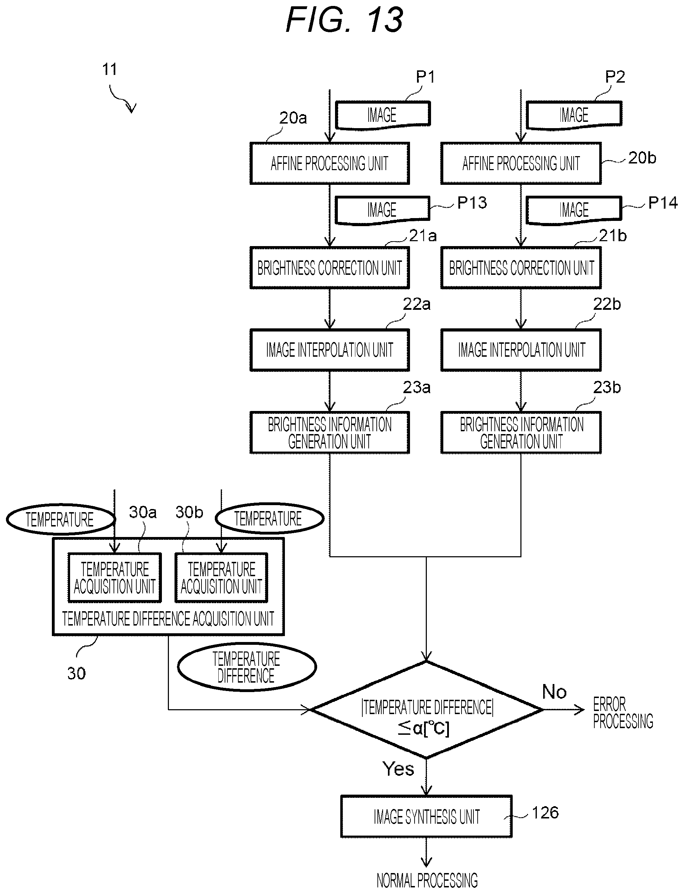

FIG. 13 is a block diagram illustrating a configuration example of the computing device 11 in the fourth comparative example. The computing device 11 in the fourth comparative example includes an image synthesis unit 126 instead of the parallax image generation unit 24 and the distance calculation unit 25. The affine processing units 20a and 20b output the images P13 and P14, respectively.

The temperature acquisition unit 30a acquires a temperature related to the camera 150 from the temperature sensor 53, and the temperature acquisition unit 30b acquires a temperature related to the camera 160 from the temperature sensor 63. The temperature difference acquisition unit 30 acquires and outputs a temperature difference (temperature difference between cameras) between the temperature related to the camera 150 and the temperature related to the camera 160.

When an absolute value of the temperature difference is equal to or smaller than a predetermined value, the computing device 11 (image synthesis unit 126) synthesizes the image P3 and the image P4 to generate a synthesized image as described with reference to FIG. 12. Thereafter, normal processing according to a system is performed. When the absolute value of the temperature difference is equal to or larger than the predetermined value, it is notified that an error has occurred at the time of generating the synthesized image. Through the above procedure, a correct image can be output to the system side.

Although error processing is performed in the same manner as in the first comparative example in the above description, temperature adjustment or coefficient change may be performed as in the second or third comparative example. Although the image P14 is included in the image P13 in FIG. 12, the images P13 and P14 may be images having similar sizes or may be images having a partially common region without being limited thereto. In any case, the same effect as that of the fourth comparative example can be obtained.

### <First Embodiment>

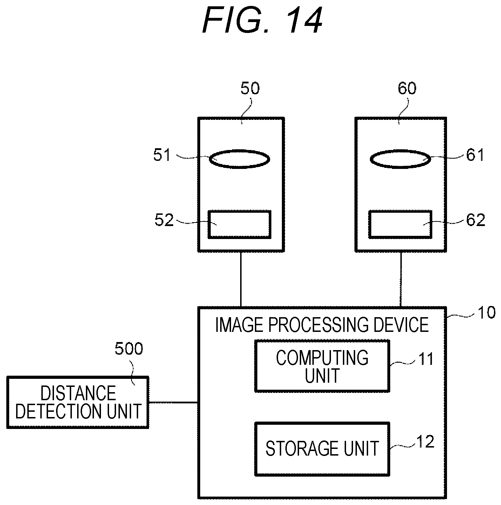

FIG. 14 is a block diagram illustrating an example of a configuration including the image processing device 10 according to a first embodiment of the present invention. In the first embodiment, the image processing device 10 converts a separately acquired distance error into a temperature difference instead of using the temperature sensors 53 and 63. Since the other configurations are the same as those of the first to fourth comparative examples, the fact of converting the distance error into the temperature difference will be mainly described hereinafter.

A distance detection unit 500 detects a distance to an object and outputs the distance to the image processing device 10. The distance detection unit 500 can be configured using, for example, a distance measurement device capable of measuring a distance to an object such as a radar and light detection and ranging (LiDAR). The distance detection unit 500 can be configured as a part of the image processing device 10, or can be configured as a device separate from the image processing device 10.

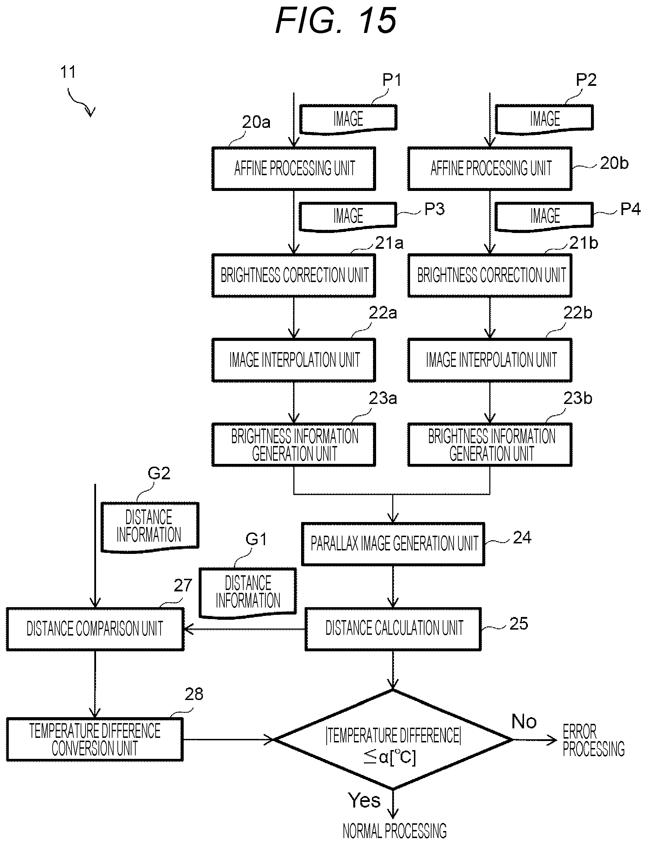

FIG. 15 is a block diagram illustrating a configuration example of the computing device 11 in the first embodiment. The computing device 11 includes a distance comparison unit 27 and a temperature difference conversion unit 28, instead of the temperature difference acquisition unit 30. The distance calculation unit 25 calculates a distance to the object and outputs the result as distance information G1. The distance comparison unit 27 receives the distance information G1 and receives distance information G2 detected by the distance detection unit 500. The distance comparison unit 27 compares the distance information G1 with the distance information G2, and notifies the temperature difference conversion unit 28 of the result. The temperature difference conversion unit 28 converts the comparison result into the temperature difference between the cameras 50 and 60. The other processing is similar to that described in the first comparative example.

The temperature difference conversion unit 28 converts the distance information into the temperature difference by the following procedure. A correspondence relationship between the temperature difference between the cameras and a distance measurement error can be acquired in advance as described with reference to FIG. 4. For example, in a case where it is assumed that the distance information G2 is accurate, a distance measurement error of the distance information G1 can be calculated using the distance information G2 as a reference. The temperature difference can be estimated by applying the distance measurement error to the correspondence relationship as illustrated in FIG. 4.

According to the first embodiment, if the distance information G2 can be acquired from the distance detection unit 500, the distance measurement error can be converted into the temperature difference using the separately calculated distance information G1. Therefore, it is advantageous that the temperature sensors 53 and 63 are not required. Even in a case where the temperature sensors 53 and 63 are provided, it is also possible to consider an application in which a measurement result is correct by comparing the temperature difference converted by a technique of the first embodiment with a measurement result obtained by each temperature sensor.

Instead of converting a difference between the distance information G1 and G2 into the temperature difference, the difference may be directly regarded as the distance measurement error. Alternatively, the difference may be output to the outside of the image processing device 10, and the difference may be used when an external device that has received the difference determines the distance measurement error.

When an absolute value of the temperature difference is equal to or larger than a predetermined value, the temperature adjustment described in the second comparative example or the coefficient adjustment described in the third comparative example may be performed instead of or in combination with error processing. Since the temperature adjustment is performed on any of two lenses at a higher (or lower) temperature, it is necessary to determine the sign of the temperature difference (that is, which lens has a higher (or lower) temperature). Since the coefficient adjustment is performed using a lens closer to a standard operating temperature as a reference (that is, a correction coefficient of a lens farther from the standard operating temperature is mainly changed), it is necessary to determine the sign of the temperature difference. Therefore, it is necessary to determine whether the temperature difference is positive or negative in any case of performing either the temperature adjustment or the coefficient adjustment. Such a sign determination procedure will be described hereinafter.

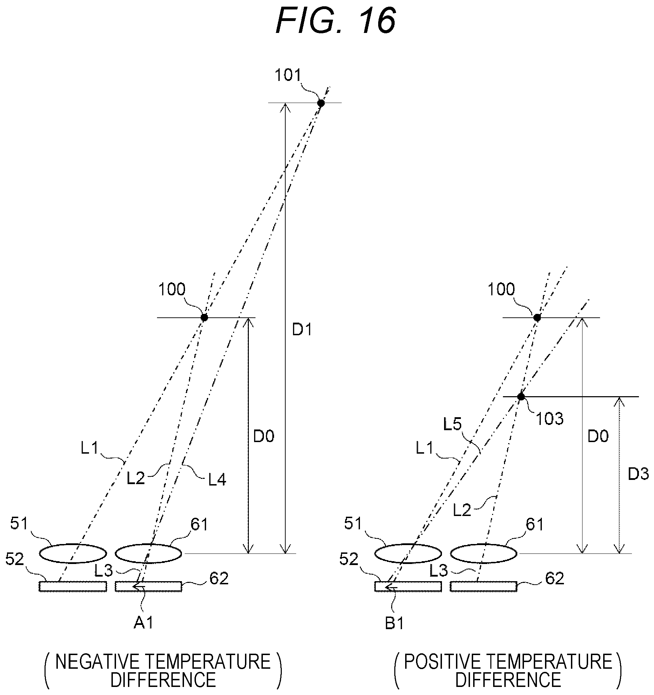

FIG. 16 is a view illustrating a detection distance when the temperature difference between the cameras becomes positive and a detection distance when the temperature difference becomes negative. A left view in FIG. 16 illustrates a case where a temperature of the lens 61 rises (temperature difference is negative), and a right view in FIG. 16 illustrates a case where a temperature of the lens 51 rises (temperature difference is positive). When the object 100 is on the right side of the image processing device 10, the detected distance D1 is longer than the actual distance D0 in the case where the temperature difference is negative. In the case where the temperature difference is positive, the detected distance D2 is shorter than the actual distance D0. In a case where the distance information G2 does not largely depend on the temperature, the actual distance D0 can be detected by the distance detection unit 500, and thus, whether the temperature difference is positive or negative can be determined by comparing D0 with D1 or D0 with D2. If the sign of the temperature difference is known, which of the lenses 51 and 61 has a higher (or lower) temperature can be determined, and thus, the processing described in the second and third comparative examples can be performed based on this.

It is desirable to apply the configuration using the distance detection unit 500 as in the first embodiment particularly in a state where the temperature is unstable such as at the time of activation. This is because the temperature difference between the cameras decreases as time elapses, and thus, it is possible to perform distance measurement to the same extent as the distance detection unit 500. The configuration of the first embodiment is effective in a case where a distance sensor is used in automatic driving of a vehicle or the like.

In the above embodiment and comparative examples, for example, the error processing as in the first comparative example may be performed when the temperature difference between the cameras occurs, and then, the lens temperature may be adjusted as in the second comparative example, or the image processing method may be changed as in the third comparative example.

In the above embodiment, the computing device 11 may stop processing for calculating the parallax image and the distance, instead of outputting the error or together with the error output when the temperature difference does not fall within the reference range.

In the above embodiment, each functional unit included in the computing device 11 can be configured by hardware such as a circuit device in which a corresponding function is mounted, or can be configured as the computing device 11 executes software implementing the function.

### Reference Signs List

- 10: image processing device
- 11: computing device
- 12: storage device
- 20a: affine processing unit
- 20b: affine processing unit
- 25: distance calculation unit
- 30: temperature difference acquisition unit
- 31: coefficient changing unit
- 50: camera
- 51: lens
- 52: image sensor
- 53: temperature sensor
- 60: camera
- 61: lens
- 62: image sensor
- 63: temperature sensor

## Claims

1. An image processing device (10) that processes an image captured by a camera, the image processing device (10) comprising:
first and second cameras (50, 60) that capture images (P1, P2) of an object to be captured; and
a computing device (11) that performs first processing on the images (P1, P2) captured by the first and second cameras (50, 60) and outputs a result of the first processing,
wherein the computing device (11) generates a parallax image from the image (P1) captured by the first camera (50) and the image (P2) captured by the second camera (60) as the first processing to calculate a first distance (G1) to the object in the image,
the computing device (11) acquires a temperature difference between a first temperature of the first camera (50) and a second temperature of the second camera,
the computing device (11) outputs the result if the temperature difference falls within a reference range, and
the computing device (11) performs second processing different from the first processing, instead of or together with the outputting of the result if the temperature difference does not fall within the reference range, **characterised in that**:
the computing device (11) acquires a second distance (G2) to the object from a distance measurement device, and
the computing device (11) calculates the temperature difference in accordance with a difference between the first distance (G1) and the second distance (G2).

2. The image processing device (10) according to claim 1, wherein
the computing device (11) determines which one of the first temperature and the second temperature is higher based on which one of the first distance (G1) and the second distance (G2) is longer.

3. The image processing device (10) according to claim 2, wherein
the first camera (50) includes a first lens (51), and the second camera (60) includes a second lens (61),
the computing device (11) lowers a temperature of the first lens (51) or raises a temperature of the second lens (61) as the second processing to bring the temperature difference close to the reference range if the first temperature is higher than the second temperature, and
the computing device (11) raises the temperature of the first lens (51) or lowers the temperature of the second lens (61) as the second processing to bring the temperature difference close to the reference range if the first temperature is lower than the second temperature.

4. The image processing device (10) according to claim 2, wherein
the computing device (11) includes: a first correction (20a) unit that corrects distortion of the image (P1) captured by the first camera (50) with a first correction coefficient; and a second correction unit (20b) that corrects distortion of the image captured by the second camera (60) with a second correction coefficient,
the computing device (10) changes the second correction coefficient as the second processing to correct distortion caused by the temperature difference if the first temperature is closer to a reference temperature than the second temperature, and
the computing device (10) changes the first correction coefficient as the second processing to correct distortion caused by the temperature difference if the second temperature is closer to the reference temperature than the first temperature.

5. The image processing device (10) according to claim 1, wherein
the computing device outputs a notification that an error has occurred when calculating the parallax image or the distance as the second processing if the temperature difference does not fall within the reference range.

6. The image processing device (10) according to claim 1, wherein
the computing device stops the outputting in the first processing as the second processing if the temperature difference does not fall within the reference range.

7. The image processing device (10) according to claim 1, further comprising:
a thermometer (53, 63) that acquires the first temperature and the second temperature,
wherein the computing device (11) acquires the first temperature and the second temperature from the thermometer (53, 63).

## Patentansprüche

1. Bildverarbeitungsvorrichtung (10), die ein von einer Kamera aufgenommenes Bild verarbeitet, wobei die Bildverarbeitungsvorrichtung (10) Folgendes umfasst:
eine erste und eine zweite Kamera (50, 60), die Bilder (P1, P2) eines aufzunehmenden Gegenstands aufnehmen; und
eine Computervorrichtung (11), die an den von der ersten und zweiten Kamera (50, 60) aufgenommenen Bildern (P1, P2) eine erste Verarbeitung vornimmt und ein Ergebnis der ersten Verarbeitung ausgibt,
wobei die Computervorrichtung (11) als die erste Verarbeitung ein Parallaxen-Bild aus dem von der ersten Kamera (50) aufgenommenen Bild (P1) und dem von der zweiten Kamera (60) aufgenommenen Bild (P2) erzeugt, um eine erste Entfernung (G1) zum Gegenstand auf dem Bild zu berechnen,
wobei die Computervorrichtung (11) eine Temperaturdifferenz zwischen einer ersten Temperatur der ersten Kamera (50) und einer zweiten Temperatur der zweiten Kamera erfasst,
wobei die Computervorrichtung (11) das Ergebnis ausgibt, wenn die Temperaturdifferenz in einen Referenzbereich fällt, und
wobei die Computervorrichtung (11) statt des Ausgebens oder zusammen mit dem Ausgeben des Ergebnisses eine zweite Verarbeitung, die sich von der ersten Verarbeitung unterscheidet, durchführt, wenn die Temperaturdifferenz nicht in den Referenzbereich fällt, **dadurch gekennzeichnet, dass**:
die Computervorrichtung (11) eine zweite Entfernung (G2) zum Gegenstand von einer Entfernungsmessvorrichtung erfasst und
die Computervorrichtung (11) die Temperaturdifferenz entsprechend einer Differenz zwischen der ersten Entfernung (G1) und der zweiten Entfernung (G2) berechnet.

2. Bildverarbeitungsvorrichtung (10) nach Anspruch 1, wobei
die Computervorrichtung (11) beruhend darauf, welche aus der ersten Entfernung (G1) und der zweiten Entfernung (G2) länger ist, bestimmt, welche aus der ersten Temperatur und der zweiten Temperatur höher ist.

3. Bildverarbeitungsvorrichtung (10) nach Anspruch 2, wobei
die erste Kamera (50) eine erste Linse (51) umfasst und die zweite Kamera (60) eine zweite Linse (61) umfasst,
die Computervorrichtung (11) als die zweite Verarbeitung die Temperatur der ersten Linse (51) herabsetzt oder die Temperatur der zweiten Linse (61) anhebt, um die Temperaturdifferenz dem Referenzbereich anzunähern, wenn die erste Temperatur höher ist als die zweite Temperatur, und
die Computervorrichtung (11) als die zweite Verarbeitung die Temperatur der ersten Linse (51) anhebt oder die Temperatur der zweiten Linse (61) herabsetzt, um die Temperaturdifferenz dem Referenzbereich anzunähern, wenn die erste Temperatur niedriger ist als die zweite Temperatur.

4. Bildverarbeitungsvorrichtung (10) nach Anspruch 2, wobei
die Computervorrichtung (11) Folgendes umfasst: eine erste Korrektureinheit (20a), die eine Verzerrung des von der ersten Kamera (50) aufgenommenen Bilds (P1) mit einem ersten Korrekturkoeffizienten korrigiert; und eine zweite Korrektureinheit (20b), die eine Verzerrung des von der zweiten Kamera (60) aufgenommenen Bilds mit einem zweiten Korrekturkoeffizienten korrigiert,
die Computervorrichtung (10) als die zweite Verarbeitung den zweiten Korrekturkoeffizienten ändert, um eine von der Temperaturdifferenz verursachte Verzerrung zu korrigieren, wenn die erste Temperatur näher bei einer Referenztemperatur liegt als die zweite Temperatur, und
die Computervorrichtung (10) als die zweite Verarbeitung den ersten Korrekturkoeffizienten ändert, um die durch die Temperaturdifferenz verursachte Verzerrung zu korrigieren, wenn die zweite Temperatur näher bei der Referenztemperatur liegt als die erste Temperatur.

5. Bildverarbeitungsvorrichtung (10) nach Anspruch 1, wobei
die Computervorrichtung als die zweite Verarbeitung eine Mitteilung ausgibt, dass ein Fehler beim Berechnen des Parallaxen-Bilds oder der Entfernung aufgetreten ist, wenn die Temperaturdifferenz nicht in den Referenzbereich fällt.

6. Bildverarbeitungsvorrichtung (10) nach Anspruch 1, wobei
die Computervorrichtung als die zweite Verarbeitung das Ausgeben in der ersten Verarbeitung anhält, wenn die Temperaturdifferenz nicht in den Referenzbereich fällt.

7. Bildverarbeitungsvorrichtung (10) nach Anspruch 1, ferner umfassend:
ein Thermometer (53, 63), das die erste Temperatur und die zweite Temperatur erfasst,
wobei die Computervorrichtung (11) die erste Temperatur und die zweite Temperatur vom Thermometer (53, 63) erfasst.

## Revendications

1. Dispositif de traitement d'image (10) qui traite une image capturée par une caméra, le dispositif de traitement d'images (10) comprenant :
des première et seconde caméras (50, 60) qui capturent des images (P1, P2) d'un objet à capturer ; et
un dispositif informatique (11) qui effectue un premier traitement sur les images (P1, P2) capturées par les première et seconde caméras (50, 60) et délivre en sortie un résultat du premier traitement,
dans lequel le dispositif informatique (11) génère une image de parallaxe à partir de l'image (P1) capturée par la première caméra (50) et de l'image (P2) capturée par la seconde caméra (60) en tant que premier traitement pour calculer une première distance (G1) par rapport à l'objet dans l'image,
le dispositif de calcul (11) acquiert une différence de température entre une première température de la première caméra (50) et une seconde température de la seconde caméra,
le dispositif informatique (11) produit le résultat si la différence de température se situe dans une plage de référence, et
le dispositif informatique (11) effectue un second traitement différent du premier traitement, au lieu de ou conjointement avec la délivrance en sortie du résultat si la différence de température ne se situe pas dans la plage de référence, **caractérisé en ce que** :
le dispositif informatique (11) acquiert une seconde distance (G2) par rapport à l'objet à partir d'un dispositif de mesure de distance, et
le dispositif de calcul (11) calcule la différence de température conformément à une différence entre la première distance (G1) et la seconde distance (G2).

2. Dispositif de traitement d'image (10) selon la revendication 1, dans lequel
le dispositif de calcul (11) détermine celle de la première température et de la seconde température est la plus élevée sur la base de celle de la première distance (G1) et de la seconde distance (G2) qui est la plus longue.

3. Dispositif de traitement d'image (10) selon la revendication 2, dans lequel
la première caméra (50) inclut une première lentille (51), et la seconde caméra (60) inclut une seconde lentille (61),
le dispositif de calcul (11) abaisse une température de la première lentille (51) ou élève une température de la seconde lentille (61) en tant que second traitement pour rapprocher la différence de température de la plage de référence si la première température est supérieure à la seconde température, et
le dispositif de calcul (11) augmente la température de la première lentille (51) ou abaisse la température de la seconde lentille (61) en tant que second traitement pour rapprocher la différence de température de la plage de référence si la première température est inférieure à la seconde température.

4. Dispositif de traitement d'image (10) selon la revendication 2, dans lequel
le dispositif de calcul (11) inclut : une première unité de correction (20a) qui corrige une distorsion de l'image (P1) capturée par la première caméra (50) avec un premier coefficient de correction ; et une seconde unité de correction (20b) qui corrige une distorsion de l'image capturée par la seconde caméra (60) avec un second coefficient de correction,
le dispositif de calcul (10) modifie le second coefficient de correction en tant que second traitement pour corriger une distorsion provoquée par la différence de température si la première température est plus proche d'une température de référence que la seconde température, et
le dispositif de calcul (10) modifie le premier coefficient de correction en tant que second traitement pour corriger une distorsion causée par la différence de température si la seconde température est plus proche de la température de référence que la première température.

5. Dispositif de traitement d'image (10) selon la revendication 1, dans lequel
le dispositif informatique émet une notification qu'une erreur s'est produite lors du calcul de l'image de parallaxe ou de la distance en tant que second traitement si la différence de température ne se situe pas dans la plage de référence.

6. Dispositif de traitement d'image (10) selon la revendication 1, dans lequel
le dispositif informatique arrête la délivrance en sortie dans le premier traitement en tant que second traitement si la différence de température ne se situe pas dans la plage de référence.

7. Dispositif de traitement d'image (10) selon la revendication 1, comprenant en outre :
un thermomètre (53, 63) qui acquiert la première température et la seconde température,
dans lequel le dispositif informatique (11) acquiert la première température et la seconde température à partir du thermomètre (53, 63).
